# EUROPEAN PATENT APPLICATION

(11) **EP 4 848 020 A1**
(43) Date of publication of application: **02.12.2026**
(21) Application number: 25178789.1
(22) Date of filing: 26.05.2025
(51) Int. Cl.: G05B 23/02

(54) **METHOD AND SYSTEM FOR ADAPTIVE CONTEXT-AWARE ALARM MANAGEMENT IN SCADA ENVIRONMENTS**

(71) Applicant: Siemens Aktiengesellschaft, 80333 München (DE)
(72) Inventor: Kannappan, Sathishkumar, 560083 Bangalore, Karnataka (IN); Nagaraj, Thejaswi, 560098 Bangalore (IN)
(74) Representative: Isarpatent

(57) **Abstract**

A computer-implemented method is provided for adaptive context-aware alarm management in a SCADA environment. The method comprises receiving, by a contextual data fusion engine, a plurality of alarm signals and a plurality of contextual signals representative of process state, device state, communication status, and operator inputs. The contextual data fusion engine synchronizes these signals based on time correlation to generate a plurality of enriched alarm context records. For each enriched alarm context record, an adaptive hysteresis band processor determines at least one adaptive alarm threshold and at least one adaptive persistence window, leveraging both live contextual information and historical alarm data. Alarm events are classified as significant if a monitored process variable exceeds the respective adaptive alarm threshold for longer than the adaptive persistence window. Only these significant alarm events are output via a human-machine interface, ensuring that nuisance alarms are omitted and operators are presented with concise, actionable notifications.

## Description

The present disclosure relates to a field of industrial process automation, and more particularly relates to a method and system for adaptive context-aware alarm management in a SCADA environment.

An industrial facility such as a petrochemical refinery comprises numerous control valves, pumps, sensors, and programmable logic controllers that are supervised by a SCADA system. Each asset generates status and alarm data that must be interpreted swiftly to maintain safety and productivity.

Conventional alarm schemes rely on fixed, engineer-defined thresholds that do not adjust to live process modes, network delays, device faults, or operator-initiated maintenance. Consequently, benign process excursions often trigger nuisance alarms, overwhelming operators with irrelevant messages.

Excessive false alerts lead to alarm fatigue, delayed response to real hazards, increased downtime, and regulatory non-compliance. Static configurations also ignore valuable historical evidence showing when an alarm condition was previously considered inconsequential under similar circumstances.

Thus, it an object of the present disclosure to provide a method and system for adaptive context-aware alarm management in a SCADA environment.

The object of the present disclosure is achieved by a method of adaptive context-aware alarm management in a SCADA environment. The method comprises receiving, by a contextual data fusion engine, a plurality of alarm signals and a plurality of contextual signals, wherein the plurality of contextual signals comprise at least a communication state parameter, a process state parameter, a device state parameter, an operator input parameter, and a custom contextual parameter.

The method further comprises receiving, by the contextual data fusion engine, a plurality of contextual signals that are time-stamped at source with high-resolution timing by a distributed context capture architecture.

The method further comprises synchronizing, by the contextual data fusion engine, the plurality of contextual signals and the plurality of alarm signals using the time-stamps to preserve temporal alignment. The method further comprises allocating, by the contextual data fusion engine, processing workload across multiple processor cores to maintain a sub-second alarm processing latency. The method further comprises selecting, by the contextual data fusion engine, at least one plug-in module corresponding to a newly registered contextual channel.

The method further comprises applying, by the contextual data fusion engine, a schema converter to normalize signals from the at least one plug-in module. The method further comprises generating, by the contextual data fusion engine, a plurality of enriched alarm context records by synchronizing at least one of the plurality of alarm signals with at least one of the plurality of contextual signals based on a time correlation. The method further comprises determining, by an adaptive hysteresis band processor, at least one context weight for each contextual parameter for each of the plurality of enriched alarm context records.

The method further comprises detecting, by the adaptive hysteresis band processor, at least one historical occurrence frequency for at least one alarm event stored in a historical alarm database. The method further comprises determining, by the adaptive hysteresis band processor, at least one adaptive alarm threshold and at least one adaptive persistence window for each of the plurality of enriched alarm context records using a combination of live system context and historical alarm data. The method further comprises modifying, by the adaptive hysteresis band processor, the at least one adaptive alarm threshold in response to the determined at least one context weight.

The method further comprises modifying, by the adaptive hysteresis band processor, at least one adaptive alarm threshold and at least one adaptive persistence window in response to the detected at least one historical occurrence frequency. The method further comprises determining, by the adaptive hysteresis band processor, at least one regulatory safety constraint associated with at least one alarm event.

The method further comprises applying, by the adaptive hysteresis band processor, the at least one regulatory safety constraint to enforce a minimum and a maximum value on the at least one adaptive alarm threshold.

The method further comprises outputting, by a human machine interface, an indication if modifying the at least one adaptive alarm threshold would violate the at least one regulatory safety constraint. The method further comprises receiving, by the adaptive hysteresis band processor, at least one operator action from the human machine interface, the at least one operator action comprising at least one of an acknowledgement, shelving, or suppression of at least one alarm event. The method further comprises modifying, by the adaptive hysteresis band processor, at least one context weight or adaptive alarm threshold in response to the received at least one operator action to implement a closed-loop learning.

The method further comprises generating, by the adaptive hysteresis band processor, version-stamped parameter updates to the historical alarm database. The method further comprises synchronizing, by the adaptive hysteresis band processor, the modified adaptive alarm threshold and adaptive persistence window with the historical alarm database for closed-loop feedback and traceability. The method further comprises synchronizing, by the contextual data fusion engine, a correlation confidence level with the historical alarm database for auditability.

The method further comprises detecting, by the adaptive hysteresis band processor, a subsidence of at least one contextual parameter previously influencing an adaptive alarm threshold. The method further comprises modifying, by the adaptive hysteresis band processor, the adaptive alarm threshold toward a baseline value according to a parameter aging mechanism. The method further comprises outputting, by the adaptive hysteresis band processor, the updated adaptive alarm threshold to maintain ongoing calibration integrity.

The method further comprises classifying, by the adaptive hysteresis band processor, at least one alarm event as significant if a process variable crosses the at least one adaptive alarm threshold for longer than the at least one adaptive persistence window. The method further comprises displaying, by the human machine interface, an indication of the applied context weights and adaptive alarm thresholds for each of the at least one alarm event classified as significant. The method further comprises outputting, by the human-machine interface, a display that includes the at least one alarm event classified as significant and omits alarm events not classified as significant, thereby reducing presentation of nuisance alarms to a human operator.

The method further comprises controlling display, by the human machine interface, of a graphical display of the at least one alarm event classified as significant, wherein the graphical display comprises associated contextual flags and adaptive alarm threshold parameters. The method further comprises displaying, by the human machine interface, an all-clear status when no alarm event is classified as significant. The method further comprises synchronizing, by the human machine interface, user interactions with the historical alarm database for continuous improvement.

The object of the present disclosure is further achieved by a system of adaptive context-aware alarm management in a SCADA environment. The system comprises a contextual data fusion engine configured to receive a plurality of alarm signals and contextual signals. The system further comprises a distributed context capture architecture arranged to time-stamp contextual signals at source with high-resolution timing.

The system further comprises a multi-core processing facility operatively coupled to the contextual data fusion engine to ensure sub-second alarm processing latency. The system comprises a plug-in management interface allowing dynamic registration of additional contextual channels and corresponding schema converters. The system further comprises an adaptive hysteresis band processor communicatively linked to the contextual data fusion engine and to a historical alarm database.

The adaptive hysteresis band processor is further configured to compute context weights, adaptive thresholds, and persistence windows based on live and historical data. The system comprises a constraint enforcement module ensuring compliance with regulatory safety limits on all computed alarm thresholds. The system further comprises a human machine interface configured to present indications of threshold violations and receive operator acknowledgements, shelving, or suppression commands.

The system further comprises a feedback synchronisation module that writes version-stamped parameter updates and operator actions to the historical alarm database for closed-loop learning. The system comprises a significant alarm selector that filters alarm events, forwarding only contextually significant alarms to the human machine interface. The system further comprises an offline caching function that preserves the last known significant alarms during network outages and resynchronises upon reconnection.

The system further comprises role-based access control ensuring that contextual alarm information is delivered to authorised personnel only.

The above-mentioned and other features of the disclosure will now be addressed with reference to the accompanying drawings of the present disclosure. The illustrated embodiments are intended to illustrate, but not limit the disclosure.

Brief description of figures:
- FIG 1: is a block diagram of a SCADA environment capable of adaptive context-aware alarm management, according to an embodiment of the present disclosure;
- FIG 2: is a block diagram of an alarm management system, such as that shown in FIG. 1, in which an embodiment of the present disclosure can be implemented;
- FIG 3: is a block diagram of an adaptive alarm intelligence module, such as that shown in FIG. 2, in which an embodiment of the present disclosure can be implemented;
- FIG 4A-C: is a process flow-chart illustrating an exemplary method of context-aware adaptive hysteresis processing, according to an embodiment of the present disclosure; and
- FIG. 5: is a process value versus time signature graph illustrating adaptive hysteresis band operation, according to an embodiment of the present disclosure.

Various embodiments are described with reference to the drawings, wherein like reference numerals are used to refer to like elements throughout.

In the following description, for the purpose of explanation, numerous specific details are set forth in order to provide thorough understanding of one or more embodiments. It may be evident that such embodiments may be practiced without these specific details.

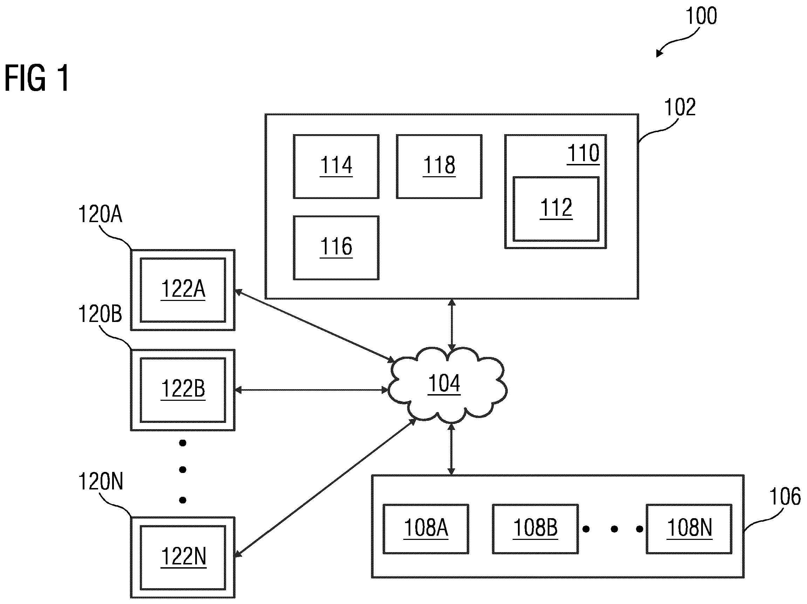

FIG 1 is a block diagram of a SCADA environment 100 capable of adaptive context-aware alarm management, according to an embodiment of the present disclosure.

In FIG 1, the SCADA environment 100 includes an alarm management system 102, a technical installation 106 and one or more human-machine interfaces 120A-N. As used herein, "SCADA environment" refers to an industrial control environment comprising configurable computing, networking, and data acquisition resources distributed over a supervisory control platform. The SCADA environment 100 provides on-demand network access to a shared pool of configurable computing and logical resources.

The alarm management system 102 is communicatively connected to the technical installation 106 via a network 104 (such as LAN, WAN, Wi-Fi, Internet, or industrial fieldbus). The alarm management system 102 is also connected to the one or more human-machine interfaces 120A-N via the network 104. The alarm management system 102 is connected to one or more plant assets 108A-N in the technical installation 106 via the network 104. The one or more plant assets 108A-N may include sensors, PLCs, pumps, motors, valves, actuators, network switches, and other control equipment.

The one or more plant assets 108A-N may be connected to each other or several other components via physical or wireless connections. Alternatively, the one or more plant assets 108A-N may also be connected via non-physical connections such as Industrial loT and 5G networks. Although FIG 1 illustrates the alarm management system 102 connected to one technical installation 106, one skilled in the art can envision that the alarm management system 102 can be connected to several technical installations 106 located at different geographical locations via the network 104.

The one or more human-machine interfaces 120A-N may be operator workstations, tablet computers, or mobile HMIs. Each of the one or more human-machine interfaces 120A-N is provided with an HMI tool 122A-N for viewing and interacting with alarm data respectively. The one or more human-machine interfaces 120A-N can access the alarm management system 102 for adaptive alarm visualization.

The one or more human-machine interfaces 120A-N can access cloud applications such as contextual analytics dashboards via a web browser. Throughout the specification, the terms "client device" and "user device" are used interchangeably.

The alarm management system 102 may be a standalone server deployed at a control center or may be a remote server on a cloud platform. In a non-claimed embodiment, the alarm management system 102 may be a cloud-based alarm server. The alarm management system 102 is capable of delivering applications for managing contextual alarm processing for the technical installation 106 comprising the one or more plant assets 108A-N. The alarm management system 102 may comprise a SCADA platform 110, an adaptive alarm intelligence module 112, a server 114 including hardware resources and an operating system (OS), a network interface 116 and a database 118.

The network interface 116 enables communication between the alarm management system 102, the technical installation 106, and the client device(s) 120A-N. The interface may allow operators at the one or more client device(s) 120A-N to access alarm history stored at the alarm management system 102 and perform one or more actions on the alarm records as the same instance. The server 114 may include one or more processors and one or more storage devices for storing data and machine-readable instructions.

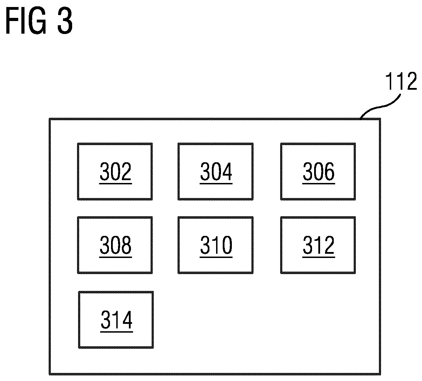

The SCADA platform 110 enables functionalities such as data acquisition, data processing, alarm rendering, and communication using the hardware resources and the OS of the servers 114. The SCADA platform 110 may further comprise an adaptive alarm intelligence module 112 configured for adaptive context-aware alarm processing. Details of the adaptive alarm intelligence module 112 are explained in FIG. 3.

The database 118 stores information relating to the technical installation 106, contextual parameters, and alarm history. The database 118 may be a SQL or NoSQL data store and is configured to store enriched alarm context records, adaptive hysteresis parameters, operator actions, regulatory constraints, and version-stamped updates.

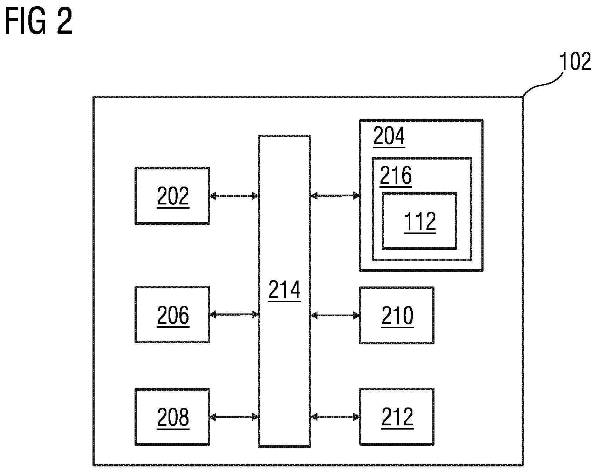

FIG 2 is a block diagram of an alarm management system 102, such as that shown in FIG. 1, in which an embodiment of the present disclosure can be implemented.

In FIG 2, the alarm management system 102 includes a processor(s) 202, an accessible memory 204, a storage unit 206, a communication interface 208, an input-output unit 210, a network interface 212 and a bus 214.

The processor(s) 202 may include any type of computational circuit capable of executing contextual fusion and adaptive hysteresis algorithms and may allocate processing workload across multiple processor cores to maintain sub-second alarm processing latency.

The memory 204 may include non-transitory volatile and non-volatile memory. The processor(s) 202 may execute machine-readable instructions stored in the memory 204. In the present embodiment, the memory 204 includes an integrated development environment (IDE) 216. The IDE 216 includes the adaptive alarm intelligence module 112 stored in the form of machine-readable instructions and executed by the processor(s) 202.

The storage unit 206 may store the database 118 that comprises historical alarm records and contextual metadata. The communication interface 208 is configured for establishing communication sessions between the one or more human-machine interfaces 120A-N and the alarm management system 102. The input-output unit 210 may include displays and input peripherals for local configuration of alarm rules.

The bus 214 acts as interconnect between the processor(s) 202, the memory 204, and the input-output unit 210. The network interface 212 may be configured to handle network connectivity, bandwidth, and traffic between the alarm management system 102, one or more human-machine interfaces 120A-N and the technical installation 106. Those of ordinary skill in the art will appreciate that the hardware depicted in FIG 2 may vary for particular implementations.

FIG 3 is a block diagram of the adaptive alarm intelligence module 112, such as that shown in FIG. 2, in which an embodiment of the present disclosure can be implemented.

In FIG 3, the adaptive alarm intelligence module 112 comprises a signal ingest module 302, a contextual data fusion engine 304, an adaptive hysteresis band processor 306, a schema conversion & plug-in manager 308, a historical alarm database 310, a significance validation module 312 and an HMI output module 314. FIG 3 is explained in conjunction with FIG 1 and FIG 2.

The signal ingest module 302 is configured for receiving alarm signals and a plurality of contextual signals comprising communication state parameters, process state parameters, device state parameters, operator input parameters, and custom contextual parameters, each time-stamped at source with high-resolution timing by a distributed context capture architecture. In one example, the signal ingest module 302 instantiates an Apache Kafka consumer group with a configurable prefetch depth of 1024 messages to guarantee lossless delivery even during peak storm conditions. The signal ingest module 302 validates each payload against a centrally hosted Avro schema registry before serialising the payload into a compact binary row format accepted by the contextual data fusion engine 304. The signal ingest module 302 additionally exposes a Representational State Transfer health-check endpoint that returns HTTP-status 200 when at least ninety-nine percent of subscribed topics are reporting "green" status, thereby enabling automated orchestration platforms to monitor runtime health.

The contextual data fusion engine 304 is configured for synchronizing the plurality of contextual signals with a plurality of alarm signals using time-stamps to preserve temporal alignment, allocating processing workload across multiple processor cores to maintain sub-second alarm processing latency, generating enriched alarm context records, and synchronizing a correlation confidence level with the historical alarm database 310 for auditability. In one example, the contextual data fusion engine 304 applies the xxHash64 hashing function to an alarm-tag identifier to derive a bucket index that deterministically maps to one of eight pre-spawned worker threads created via a C++17 thread-pool abstraction. Each worker thread is pinned to a distinct physical core on an Intel Xeon-E5-2680 processor to eliminate context-switch jitter. A bounded lock-free queue per thread decouples network ingress from computation and ensures that latency stays below 250 milliseconds even during a ten-thousand-alarms-per-second burst. Performance counters are sampled at five-hundred-millisecond intervals and, if latency exceeds the budget, the contextual data fusion engine 304 dynamically rebalances bucket assignments using a consistent-hash-ring algorithm.

The adaptive hysteresis band processor 306 is configured for calculating context weights, evaluating historical occurrence frequency, and computing adaptive alarm thresholds and adaptive persistence windows while enforcing regulatory safety constraints, and further outputs an indication to the HMI output module 314 if modifying an adaptive alarm threshold would violate a regulatory safety constraint. In a representative configuration, the adaptive hysteresis band processor 306 initialises a gradient-boosting decision-tree model with ten-thousand historical alarm context samples, a learning-rate of 0.01, and a maximum depth of five per tree. Training executes in mini-batches of two-hundred-fifty-six records on a graphics-processing-unit-accelerated compute node until the validation loss plateaus for three consecutive iterations, after which the resulting weight vector is checkpointed. Incremental online updates occur every five minutes using the latest streaming data, thereby ensuring sensitivity to concept drift while avoiding over-fitting transient anomalies. All hyper-parameter values are persisted to the historical alarm database 310, enabling deterministic reproduction of the machine-learning pipeline by a skilled person. The schema conversion & plug-in manager 308 is configured for selecting newly registered contextual channel plug-ins and applying schema converters to normalize incoming data streams.

Every plug-in module must export Init(), Parse(payload), and Close() symbols defined in a shared C header file included with the adaptive alarm intelligence module 112. The schema conversion & plug-in manager 308 invokes Init() once per plug-in at load-time, passes each incoming message to Parse(), and calls Close() during graceful shutdown to release resources. Plug-ins are discovered by scanning a designated directory for shared-object files whose metadata section lists a supported Multipurpose Internet Mail Extensions type; this scanning operation executes once per minute or immediately upon receipt of an inotify file-system event.

The schema conversion & plug-in manager 308 loads each candidate library using the POSIX dlopen interface with the RTLD_NOW flag to ensure that unresolved symbols are detected immediately, thus preventing runtime crashes. The historical alarm database 310 stores enriched alarm context records, adaptive parameters, operator actions, and version-stamped updates for closed-loop learning.

The historical alarm database 310 is implemented on a PostgreSQL 14 server configured with the "TimescaleDB" extension to support high-frequency inserts and windowed analytic queries. The historical alarm database 310 exposes a write-ahead-log streaming replica so that an external analytics cluster can process data without impacting primary write latency. The historical alarm database 310 enforces row-level security in accordance with International Electrotechnical Commission 62443 so that maintenance personnel may review device-related alarms while safety engineers access process-critical records.

The significance validation module 312 is configured for classifying alarms as significant when process variables cross adaptive alarm thresholds for longer than adaptive persistence windows and for aging parameters when influencing context subsides.

The significance validation module 312 instantiates a finite-state machine that transitions through "monitoring", "latency-pending", and "significant" states based on real-time comparisons between process values and adaptive hysteresis bands. The significance validation module 312 writes a transient record to an in-memory ring buffer each time a candidate alarm enters the "latency-pending" state, enabling immediate diagnostics if the alarm is later suppressed. The significance validation module 312 exposes a Prometheus metrics endpoint that publishes counts of evaluated, suppressed, and escalated alarms, thereby supporting continuous system health monitoring.

The HMI output module 314 is configured for transmitting displays that include alarm events classified as significant and omit alarm events not classified as significant, controlling a graphical display with associated contextual flags and adaptive alarm threshold parameters, displaying an all-clear status when no alarm event is classified as significant, receiving operator actions comprising acknowledgement, shelving, or suppression of alarm events, and synchronizing said user interactions back to the historical alarm database 310 for closed-loop learning.

In one example, the HMI output module 314 renders visual elements using a WebGL-accelerated React front-end to sustain a sixty-frames-per-second refresh rate even when hundreds of alarms are displayed simultaneously. The HMI output module 314 employs an Optimistic-Ul pattern that instantly reflects operator actions locally while awaiting backend confirmation, thereby improving perceived responsiveness. The HMI output module 314 logs frame-render times, redraw latency, and user-interface interaction metrics back to the historical alarm database 310 so that long-term usability analytics can be conducted.

When executed by the processor 202, the adaptive alarm intelligence module 112 causes the processor 202 to provide a computer-implemented method for adaptive context-aware alarm management in a supervisory control and data acquisition environment. The adaptive alarm intelligence module 112 is configured to cause the processor 202 to receive a plurality of alarm signals and a plurality of contextual signals.

The contextual data fusion engine 304 is a software service executing on a server-grade computing node that aligns and merges heterogeneous data streams into a time-ordered queue. Each alarm signal is a digital message containing an alarm tag identifier, a floating-point process value expressed in engineering units, a quality flag, and a millisecond-precision timestamp that has already been normalised by an alarm data preprocessing unit. A contextual signal is a packet conveying a current state descriptor and a timestamp that enables correlation with alarm traffic.

For example, the contextual data fusion engine 304 receives the plurality of alarm signals from an alarm data preprocessing unit inside a supervisory control and data acquisition server and simultaneously receives the plurality of contextual signals from a distributed context capture architecture deployed across programmable logic controllers and operator workstations. The plurality of contextual signals comprise at least a communication state parameter, a process state parameter, a device state parameter, an operator input parameter, and a custom contextual parameter. The communication state parameter is an enumerated value such as "healthy", "degraded", or "failed" that represents a network link condition. In a real-world refinery control room, the communication state parameter becomes "degraded" when packet loss exceeds five percent on an Ethernet segment connecting a field switch to the main control network. The process state parameter is an enumerated flag indicating whether a production unit is in start-up, steady-state, shutdown, or maintenance. During a scheduled boiler wash, the process state parameter is set to "maintenance". The device state parameter is a categorical indicator such as "normal", "calibration", "fault", or "offline" that reflects sensor health. As an example, a pressure transmitter that exceeds its calibration due date reports the device state parameter value "calibration". The operator input parameter captures human actions including alarm acknowledgement, shelving, or suppression. When an operator acknowledges an alarm on a human-machine interface, the acknowledgement is encoded as the operator input parameter. The custom contextual parameter represents any user-defined metadata, such as ambient weather or production quota, that influences alarm relevance. For instance, a "storm approaching" flag is forwarded from a meteorological system to prepare the plant for high winds.

The adaptive alarm intelligence module 112 is configured to cause the processor 202 to receive the plurality of contextual signals such that they are time-stamped at source with high-resolution timing by a distributed context capture architecture. The distributed context capture architecture is a network of lightweight edge collectors embedded within field devices, network monitors, and operator consoles, each configured to affix a nanosecond-resolution timestamp derived from a Precision Time Protocol clock to every contextual signal before broadcasting the contextual signal over a message bus. Each edge collector synchronises its local oscillator every two seconds against a grand-master clock using IEEE-1588-2008 Precision Time Protocol; measured steady-state skew remains bounded within ±500 nanoseconds across a five-kilometre fibre backbone. The distributed context capture architecture stores a most-recent offset measurement in shared memory so that subsequent timestamps can be corrected without recomputing the offset. A heartbeat packet carrying the current offset is multicast to all subscribing collectors to detect divergence in real time. If the offset exceeds the ±500 nanoseconds budget, the edge collector raises an internal "time-drift" alarm that is itself processed by the adaptive hysteresis band processor 306. In one practical deployment on an offshore platform, the distributed context capture architecture tags every process mode transition with a Coordinated Universal Time-synchronised timestamp, so that transient conditions lasting less than twenty milliseconds can be correlated with alarm bursts downstream.

The adaptive alarm intelligence module 112 further causes the processor 202 to synchronise the plurality of contextual signals and the plurality of alarm signals by using the time-stamps to preserve temporal alignment. The synchronisation is carried out in two sub-steps. In a first sub-step, the contextual data fusion engine 304 buffers incoming signals in a sliding window sized to accommodate a maximum clock skew observed in the plant network. In a second sub-step, the contextual data fusion engine 304 reorders or interpolates the buffered records so that all signals sharing an identical or nearest-neighbour timestamp are emitted as a coherent bundle. The plurality of contextual signals and the plurality of alarm signals are synchronised by application of an algorithm such as at least one of a cross-correlation algorithm, a dynamic time-warping algorithm, or a Kalman filter-based alignment algorithm on their respective timestamp vectors. The algorithm is configured to minimise temporal offset while retaining original sample integrity. In one embodiment, the contextual data fusion engine 304 applies a dynamic time-warping algorithm to synchronise the plurality of contextual signals and the plurality of alarm signals. Preserving temporal alignment ensures that an alarm violation and its causative process state parameter change are represented within the same millisecond-resolution bundle, thereby preventing misdiagnosis that commonly occurs in traditional fixed-polling supervisory control and data acquisition systems.

The adaptive alarm intelligence module 112 further causes the processor 202 to allocate processing workload across multiple processor cores to maintain a sub-second alarm processing latency. The contextual data fusion engine 304 partitions incoming data streams by an alarm tag hash, assigns each partition to an available processor core in a round-robin fashion, and applies back-pressure control when queue length exceeds a configurable threshold. Example scheduling algorithms that distribute the workload include a work-stealing scheduler, a least-loaded core scheduler, and a static thread-per-partition scheduler, with a work-stealing scheduler being selected in one embodiment because it balances uneven alarm bursts effectively. This multicore allocation enables a 250-millisecond end-to-end processing time during a plant-wide disturbance that generates a plurality of alarm messages, whereas, in an exemplary illustration, a legacy single-threaded system breaches the recommended one-second operator notification window.

The adaptive alarm intelligence module 112 is configured to cause the processor 202 to select at least one plug-in module corresponding to a newly registered contextual channel. The selection is enacted in two sub-steps. In a first sub-step, the contextual data fusion engine 304 queries a registry service that lists available plug-in modules together with the signal schemas the plug-in modules support. In a second sub-step, upon detecting a match between a newly registered contextual channel and a listed plug-in module, the contextual data fusion engine 304 dynamically loads the plug-in module into an execution context. The at least one plug-in module is selected by application of an algorithm such as at least one of a rule-based matching algorithm, a metadata-driven discovery algorithm, or a machine-readable contract verification algorithm on the channel registration data. The algorithm is configured to guarantee that only compatible plug-in modules capable of parsing a channel's payload format are activated. In one embodiment, the contextual data fusion engine 304 applies a metadata-driven discovery algorithm to select the at least one plug-in module. The plug-in module is a deployable software component that understands the protocol and data schema of a particular context source. For example, a "weather-station" plug-in module parses barometric pressure messages arriving via Message Queuing Telemetry Transport at a wind farm control centre.

The adaptive alarm intelligence module 112 is configured to cause the processor 202 to apply a schema converter to normalise signals from the at least one plug-in module. The schema converter is configured to map source-specific field names, data types, and units into a canonical internal representation that a downstream adaptive hysteresis band processor 306 expects. For example, a plug-in module reporting temperature in degrees Fahrenheit is normalised by a schema converter into degrees Celsius with a double-precision floating-point type, ensuring that threshold calculations remain unit-consistent across the plant.

The adaptive alarm intelligence module 112 is configured to cause the processor 202 to generate a plurality of enriched alarm context records by synchronising at least one of the plurality of alarm signals with at least one of the plurality of contextual signals based on a time correlation. An enriched alarm context record is a structured data object containing an alarm identifier, a raw process variable value, the synchronised contextual parameters, and a generation timestamp. In a hydroelectric power station, the plurality of enriched alarm context records generated for a turbine vibration alarm additionally hold a "maintenance mode" process state parameter flag and a "communications degraded" communication state parameter flag, thereby offering a comprehensive situational picture for subsequent adaptive processing.

The adaptive alarm intelligence module 112 is configured to cause the processor 202 to determine at least one context weight for each contextual parameter for each of the plurality of enriched alarm context records. The determination is carried out in two sub-steps. In a first sub-step, the adaptive hysteresis band processor 306 samples historical operator responses associated with similar contextual conditions from a historical alarm database 310. In a second sub-step, the adaptive hysteresis band processor 306 assigns a numeric importance score between zero and one to each contextual parameter to reflect its influence on alarm relevance. A context weight is determined by application of an algorithm such as at least one of a logistic regression algorithm, a gradient boosting decision tree algorithm, or a Bayesian updating algorithm on labelled alarm outcome data. The algorithm is configured to maximise predictive accuracy of whether an alarm will be accepted or suppressed by an operator. In one embodiment, the adaptive hysteresis band processor 306 applies a gradient boosting decision tree algorithm to determine the context weight for each contextual parameter.

The adaptive alarm intelligence module 112 is configured to cause the processor 202 to detect at least one historical occurrence frequency for at least one alarm event stored in a historical alarm database 310. The detection is executed in two sub-steps. In a first sub-step, the adaptive hysteresis band processor 306 filters a historical alarm database 310 for records matching an alarm identifier under analysis. In a second sub-step, the adaptive hysteresis band processor 306 computes a rate of occurrence per unit time for the matched records. The historical occurrence frequency is detected by application of an algorithm such as at least one of an exponentially weighted moving average algorithm, a kernel density estimation algorithm, or a Poisson rate estimation algorithm on timestamped alarm records. The algorithm is configured to derive a stable frequency estimate even when alarm arrivals are bursty. In one embodiment, the adaptive hysteresis band processor 306 applies an exponentially weighted moving average algorithm to detect the historical occurrence frequency for the at least one alarm event.

The adaptive alarm intelligence module 112 is configured to cause the processor 202 to determine at least one adaptive alarm threshold and at least one adaptive persistence window for each of the plurality of enriched alarm context records by using a combination of live system context and historical alarm data. The adaptive alarm threshold and the adaptive persistence window are determined by application of an algorithm such as at least one of a contextual weighted moving bound algorithm, a reinforcement learning algorithm, or a Bayesian change-point detection algorithm on the fused contextual data. The algorithm is configured to adjust both a numeric limit that a process variable must cross and a minimum duration for which the crossing must persist, thereby tailoring sensitivity to current plant conditions. In one embodiment, the adaptive hysteresis band processor 306 applies a contextual weighted moving bound algorithm to determine the adaptive alarm threshold and the adaptive persistence window. Compared to a static fixed-margin approach prevalent in traditional alarm systems, the adaptive calculation reduces nuisance alarms during known benign transients such as compressor start-ups.

The adaptive alarm intelligence module 112 is configured to cause the processor 202 to modify at least one adaptive alarm threshold in response to the determined at least one context weight. The adaptive alarm threshold is modified by application of an algorithm such as at least one of a proportional weight adjustment algorithm, a stochastic gradient descent algorithm, or a fuzzy logic controller algorithm on the previously computed threshold value. The algorithm is configured to raise or lower the adaptive alarm threshold proportionally to the influence score of each contextual parameter so that dominant contextual factors exert stronger modification. In one embodiment, the adaptive hysteresis band processor 306 applies a fuzzy logic controller algorithm to modify the adaptive alarm threshold.

The adaptive alarm intelligence module 112 is configured to cause the processor 202 to modify at least one adaptive alarm threshold and at least one adaptive persistence window in response to the detected at least one historical occurrence frequency. The modification is achieved in two sub-steps. In a first sub-step, the adaptive hysteresis band processor 306 compares the detected historical occurrence frequency with a configurable nuisance probability target. In a second sub-step, the adaptive hysteresis band processor 306 widens a hysteresis band or lengthens the adaptive persistence window when the frequency exceeds the target. The adaptive alarm threshold and the adaptive persistence window are modified by application of an algorithm such as at least one of a control-chart-based tuning algorithm, a Markov decision process algorithm, or a Bayesian credible interval widening algorithm on historical frequency metrics. The algorithm is configured to minimise repeat false positives while preserving detection of critical events. In one embodiment, the adaptive hysteresis band processor 306 applies a control-chart-based tuning algorithm to modify the adaptive alarm threshold and the adaptive persistence window.

The adaptive alarm intelligence module 112 is configured to cause the processor 202 to determine at least one regulatory safety constraint associated with at least one alarm event. A regulatory safety constraint is a numeric limit mandated by an external standard such as American Petroleum Institute Standard 554 or International Electrotechnical Commission Standard 61511 that specifies a maximum allowable deviation for a safety-critical variable. The determination is implemented by parsing a machine-readable safety rule repository that maps alarm identifiers to corresponding constraint values. The safety rule repository is stored as a version-controlled JavaScript Object Notation document where each alarm-tag key maps to an object {"min": value, "max": value, "units": string}. The adaptive hysteresis band processor 306 retrieves the repository at startup via a Hypertext Transfer Protocol Secure GET request and caches the parsed bounds in an in-memory unordered_map, yielding a worst-case lookup latency of fifty microseconds. A SHA-256 checksum of the repository is computed on load and periodically compared with a remote checksum to detect tampering. When a mismatch is detected, the adaptive hysteresis band processor 306 enters a fail-safe mode that refuses to relax thresholds until a verified repository is available.

The adaptive alarm intelligence module 112 is configured to cause the processor 202 to apply the at least one regulatory safety constraint to enforce a minimum and a maximum value on the at least one adaptive alarm threshold. In one example, the at least one alarm event is associated with a toxic gas leak concentration. In such a case, the adaptive hysteresis band processor 306 clamps the adaptive alarm threshold so that the adaptive alarm threshold cannot exceed an occupational exposure limit. In another example, the at least one alarm event is associated with cooling water temperature during turbine operation. In such a case, the adaptive hysteresis band processor 306 prevents the adaptive alarm threshold from being lowered below a manufacturer's minimum safe temperature, thereby safeguarding equipment integrity.

The adaptive alarm intelligence module 112 is configured to cause the processor 202 to output an indication if modifying the at least one adaptive alarm threshold would violate the at least one regulatory safety constraint. A human-machine interface is a graphical user application executed on an operator workstation that renders alarm banners, trend charts, and contextual flags. If the adaptive hysteresis band processor 306 proposes a threshold change outside a permissible envelope, a human-machine interface outputs a red-bordered dialog stating "Requested threshold violates safety limit" together with the offending values.

The adaptive alarm intelligence module 112 is configured to cause the processor 202 to receive at least one operator action from a human-machine interface, the at least one operator action comprising at least one of an acknowledgement, shelving, or suppression of at least one alarm event. For example, the adaptive hysteresis band processor 306 receives the operator action "shelve for eight hours" from a human-machine interface located in a central control room.

The adaptive alarm intelligence module 112 is configured to cause the processor 202 to modify at least one context weight or at least one adaptive alarm threshold in response to the received at least one operator action to implement closed-loop learning. The modification is performed by application of an algorithm such as at least one of a Q-learning algorithm, a recursive least-squares algorithm, or an adaptive resonance theory algorithm on operator-labelled alarm records. The algorithm is configured to reinforce parameter changes that historically led to acknowledged significant alarms while discouraging patterns that resulted in frequent shelving. In one embodiment, the adaptive hysteresis band processor 306 applies a Q-learning algorithm to modify the at least one context weight or the at least one adaptive alarm threshold.

The adaptive alarm intelligence module 112 is configured to cause the processor 202 to generate version-stamped parameter updates to a historical alarm database 310. Each parameter update includes a semantic version number, a previous value, a new value, a timestamp of change, and an operator command that triggered the update. In a liquefied natural gas terminal, this audit trail enables regulators to trace every threshold change back to an operational justification.

The adaptive alarm intelligence module 112 is configured to cause the processor 202 to synchronise the modified adaptive alarm threshold and the adaptive persistence window with a historical alarm database 310 for closed-loop feedback and traceability. The synchronisation is enacted in two sub-steps. First, the adaptive hysteresis band processor 306 writes the modified parameters to a historical alarm database 310 together with a unique correlation identifier. Second, the adaptive hysteresis band processor 306 confirms the write transaction and marks a runtime parameter cache as coherent. The modified adaptive alarm threshold and the adaptive persistence window are synchronised by application of an algorithm such as at least one of a two-phase commit algorithm, a vector clock reconciliation algorithm, or a conflict-free replicated data type algorithm on a parameter record set. The algorithm is configured to guarantee that no parameter drift occurs between a runtime engine and a historical alarm database. In one embodiment, the adaptive hysteresis band processor 306 applies a two-phase commit algorithm to synchronise the modified adaptive alarm threshold and the adaptive persistence window. The closed-loop feedback is a recurring data exchange cycle between the runtime parameter engine and a historical alarm database 310, which autonomously refines alarm processing parameters based on observed outcomes. Examples of the closed-loop feedback include, but are not limited to, periodically writing updated thresholds after each alarm burst, immediately adjusting persistence windows following operator shelving actions, and nightly batch reconciliations that compare predicted versus actual alarm severities.

The adaptive alarm intelligence module 112 is configured to cause the processor 202 to synchronise a correlation confidence level with a historical alarm database 310 for auditability. The correlation confidence level is a floating-point score between zero and one that quantifies an accuracy of time alignment for each enriched alarm context record. For instance, a correlation confidence level of 0.95 indicates that a timestamp skew after synchronisation was less than two milliseconds.

The adaptive alarm intelligence module 112 is configured to cause the processor 202 to detect a subsidence of at least one contextual parameter previously influencing an adaptive alarm threshold. The subsidence is detected by monitoring a real-time value of a contextual parameter and declaring subsidence when an absolute derivative drops below a configured epsilon for a predefined duration. The detection is carried out by application of an algorithm such as at least one of a sliding-window variance algorithm, a cumulative sum control algorithm, or a low-pass filter derivative algorithm on a contextual parameter time series. The algorithm is configured to recognise when an influencing factor, such as a temporary maintenance mode, has ended. In one embodiment, the adaptive hysteresis band processor 306 applies a sliding-window variance algorithm to detect the subsidence of the contextual parameter.

The adaptive alarm intelligence module 112 is configured to cause the processor 202 to modify an adaptive alarm threshold toward a baseline value according to a parameter ageing mechanism. A parameter ageing mechanism exponentially decays a magnitude of previous threshold adjustments so that, over time, the adaptive alarm threshold returns to a design value unless reinforced by new contextual evidence. A decay factor λ = 0.95 is applied once per minute so that each adaptive bias ΔT is updated as ΔT_new = λ·ΔT_prev whenever no reinforcing context is detected. The baseline threshold value T_base remains immutable and is recorded in the historical alarm database 310 for audit compliance. The adaptive hysteresis band processor 306 evaluates the cumulative bias magnitude each hour and automatically resets λ to 0.90 if the bias has not returned within five percent of T_base after twenty-four hours. All decay computations are executed in sixty-four-bit floating-point arithmetic to preserve numerical precision across extended operational periods.

The adaptive alarm intelligence module 112 is configured to cause the processor 202 to output the updated adaptive alarm threshold to maintain ongoing calibration integrity. For example, after a parameter ageing mechanism reduces a maintenance-mode bias by fifty percent, an adaptive hysteresis band processor 306 outputs the updated adaptive alarm threshold to a human-machine interface for operator visibility and to a runtime alarm server for immediate enforcement. Ongoing calibration integrity is a continuous assurance of numerical correctness of adaptive thresholds that protects an alarm system from gradual drift caused by temporary contextual influences. Examples of the ongoing calibration integrity include, but are not limited to, returning a pressure alarm limit back to 6.0 bar after maintenance ends, slowly relaxing a communication-loss bias once a network stabilises, and restoring default high-temperature limits after seasonal heat events subside.

The adaptive alarm intelligence module 112 is configured to cause the processor 202 to classify at least one alarm event as significant if a process variable crosses the at least one adaptive alarm threshold for longer than the at least one adaptive persistence window. The classification is executed by evaluating a Boolean predicate that combines a threshold-crossing condition with a sliding-window timer. If the Boolean predicate holds true, the alarm event is stamped as significant and forwarded downstream.

The adaptive alarm intelligence module 112 is configured to cause the processor 202 to display an indication of the applied context weights and the adaptive alarm thresholds for each of the at least one alarm event classified as significant. For instance, when a boiler pressure alarm is declared significant, a human-machine interface places a tooltip next to the alarm entry showing a context weight of 0.8 for "device fault" and an adapted threshold of 8.5 bar, enabling an operator to understand a rationale behind the classification instantly.

The adaptive alarm intelligence module 112 is configured to cause the processor 202 to output a display that includes the at least one alarm event classified as significant and omits alarm events not classified as significant, thereby reducing presentation of nuisance alarms to a human operator. A comparative study in a chemical batch plant demonstrates that a display suppresses eighty percent of historically logged nuisance alarms during cleaning cycles, allowing operators to focus on the remaining critical ten alarms.

The adaptive alarm intelligence module 112 is configured to cause the processor 202 to control a graphical display of the at least one alarm event classified as significant, wherein a graphical display comprises associated contextual flags and adaptive alarm threshold parameters. The control is performed by application of an algorithm such as at least one of a priority-sorted queue algorithm, a reactive programming stream algorithm, or an event-driven Model-View-Controller algorithm on an incoming significant alarm feed. The algorithm is configured to render newly arrived significant alarms at a top of a graphical display while reordering existing entries according to severity and timestamp. In one embodiment, a human-machine interface applies an event-driven Model-View-Controller algorithm to control a graphical display of the at least one alarm event classified as significant. A contextual flag is a compact visual indicator embedded in a graphical alarm display that informs operators of a specific real-time system context influencing an alarm decision. Examples of the contextual flag include, but are not limited to, a wrench icon denoting maintenance mode, a chain-link icon signalling degraded communications, and a thermometer icon showing elevated ambient temperature conditions.

The adaptive alarm intelligence module 112 is configured to cause the processor 202 to display an all-clear status when no alarm event is classified as significant. An all-clear status is a green banner reading "No significant alarms" together with a current system time, thereby preventing operators from assuming that an alarm system is malfunctioning during quiet periods.

The adaptive alarm intelligence module 112 is configured to cause the processor 202 to synchronise user interactions with the historical alarm database 310 for continuous improvement. The synchronisation is executed in two sub-steps. First, every click, acknowledgement, or note entered by an operator is marshalled into a user action object. Second, the user action object is transmitted over a secure message queue to the historical alarm database 310, where the user action object is appended to a corresponding alarm record. The user interactions are synchronised by application of an algorithm such as at least one of a publish-subscribe message bus algorithm, an eventual consistency replication algorithm, or a WebSocket-based real-time push algorithm on a user action stream. The algorithm is configured to ensure that no operator feedback is lost even during transient network outages. In one embodiment, a human-machine interface applies a WebSocket-based real-time push algorithm to synchronise the user interactions with a historical alarm database 310.

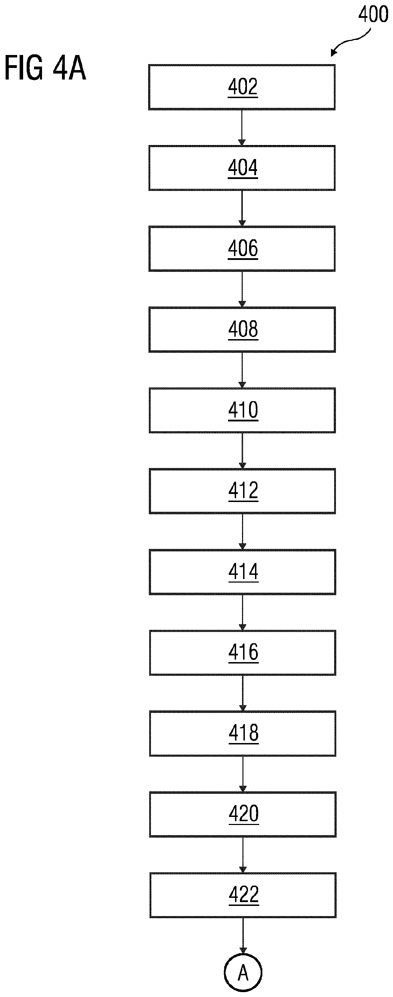

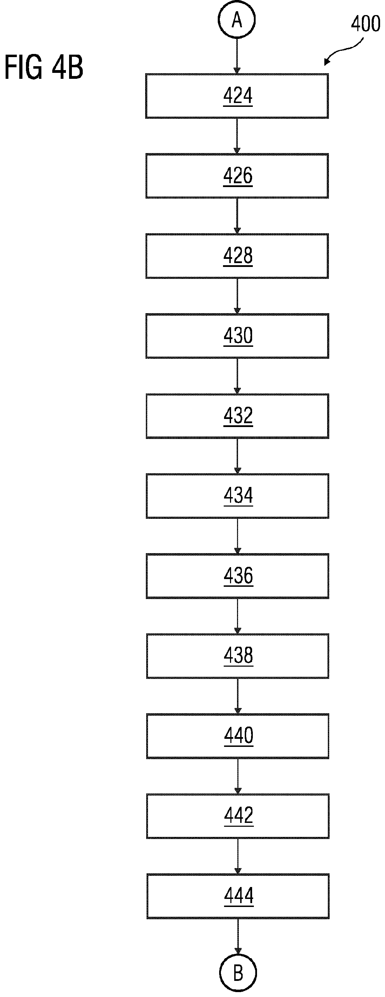

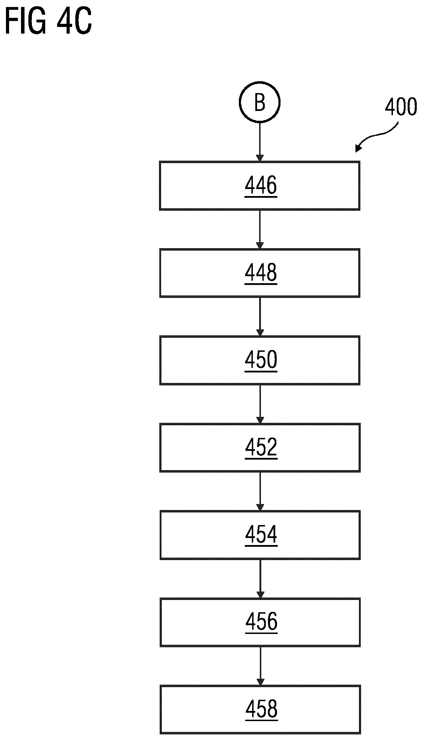

FIG 4A-C is a process flowchart illustrating an exemplary method of context-aware adaptive hysteresis processing, according to an embodiment of the present invention.

The method begins at step 402. At step 402, a plurality of alarm signals and a plurality of contextual signals, which include at least the communication state parameter, the process state parameter, the device state parameter, the operator input parameter, and the custom contextual parameter, are received by the contextual data fusion engine 304.

At step 404, a plurality of contextual signals that are time-stamped at source with high-resolution timing by a distributed context capture architecture are received by the contextual data fusion engine 304.

At step 406, the plurality of contextual signals and the plurality of alarm signals are synchronized by the contextual data fusion engine 304 using the time-stamps to preserve temporal alignment.

At step 408, processing workload is allocated by the contextual data fusion engine 304 across multiple processor cores to maintain a sub-second alarm processing latency.

At step 410, at least one plug-in module corresponding to a newly registered contextual channel is selected by the contextual data fusion engine 304.

At step 412, a schema converter is applied by the contextual data fusion engine 304 to normalize signals from the at least one plug-in module.

At step 414, a plurality of enriched alarm context records are generated by the contextual data fusion engine 304 by synchronizing at least one of the plurality of alarm signals with at least one of the plurality of contextual signals based on a time correlation.

At step 416, at least one context weight for each contextual parameter for each of the plurality of enriched alarm context records is determined by the adaptive hysteresis band processor 306.

At step 418, at least one historical occurrence frequency for at least one alarm event stored in a historical alarm database 310 is detected by the adaptive hysteresis band processor 306.

At step 420, at least one adaptive alarm threshold and at least one adaptive persistence window for each of the plurality of enriched alarm context records are determined by the adaptive hysteresis band processor 306 using a combination of live system context and historical alarm data.

At step 422, the at least one adaptive alarm threshold is modified by the adaptive hysteresis band processor 306 in response to the determined at least one context weight.

At step 424, at least one adaptive alarm threshold and at least one adaptive persistence window are modified by the adaptive hysteresis band processor 306 in response to the detected at least one historical occurrence frequency.

At step 426, at least one regulatory safety constraint associated with at least one alarm event is determined by the adaptive hysteresis band processor 306.

At step 428, the at least one regulatory safety constraint is applied by the adaptive hysteresis band processor 306 to enforce a minimum and a maximum value on the at least one adaptive alarm threshold.

At step 430, an indication is output by a human-machine interface 120A-N if modifying the at least one adaptive alarm threshold would violate the at least one regulatory safety constraint.

At step 432, at least one operator action from the one or more human-machine interfaces 120A-N, which comprises at least one of an acknowledgment, shelving, or suppression of at least one alarm event, is received by the adaptive hysteresis band processor 306. At step 434, at least one context weight or adaptive alarm threshold is modified by the adaptive hysteresis band processor 306 in response to the received at least one operator action to implement closed-loop learning.

At step 436, version-stamped parameter updates to the historical alarm database 310 are generated by the adaptive hysteresis band processor 306.

At step 438, the modified adaptive alarm threshold and adaptive persistence window with the historical alarm database 310 for closed-loop feedback and traceability are synchronized by the adaptive hysteresis band processor 306.

At step 440, the correlation confidence level with the historical alarm database 310 for auditability is synchronized by the contextual data fusion engine 304.

At step 442, a subsidence of at least one contextual parameter previously influencing an adaptive alarm threshold is detected by the adaptive hysteresis band processor 306.

At step 444, the adaptive alarm threshold is modified by the adaptive hysteresis band processor 306 towards a baseline value according to a parameter aging mechanism.

At step 446, the updated adaptive alarm threshold is output by the adaptive hysteresis band processor 306 to maintain ongoing calibration integrity.

At step 448, at least one alarm event is classified by the adaptive hysteresis band processor 306 as significant if a process variable crosses the at least one adaptive alarm threshold for longer than the at least one adaptive persistence window.

At step 450, an indication of the applied context weights and adaptive alarm thresholds for each of the at least one alarm event classified as significant is displayed by the one or more human-machine interfaces 120A-N.

At step 452, a display that includes the at least one alarm event classified as significant and omits alarm events not classified as significant, thereby reducing the presentation of nuisance alarms to a human operator, is output by the one or more human-machine interfaces 120A-N.

At step 454, the display, by the one or more human-machine interfaces 120A-N, of a graphical display of the at least one alarm event classified as significant, wherein the graphical display comprises associated contextual flags and adaptive alarm threshold parameters, is controlled.

At step 456, an all-clear status is displayed by the one or more human-machine interfaces 120A-N when no alarm event is classified as significant.

At step 458, user interactions with the historical alarm database 310 for continuous improvement are synchronized by the one or more human-machine interfaces 120A-N.

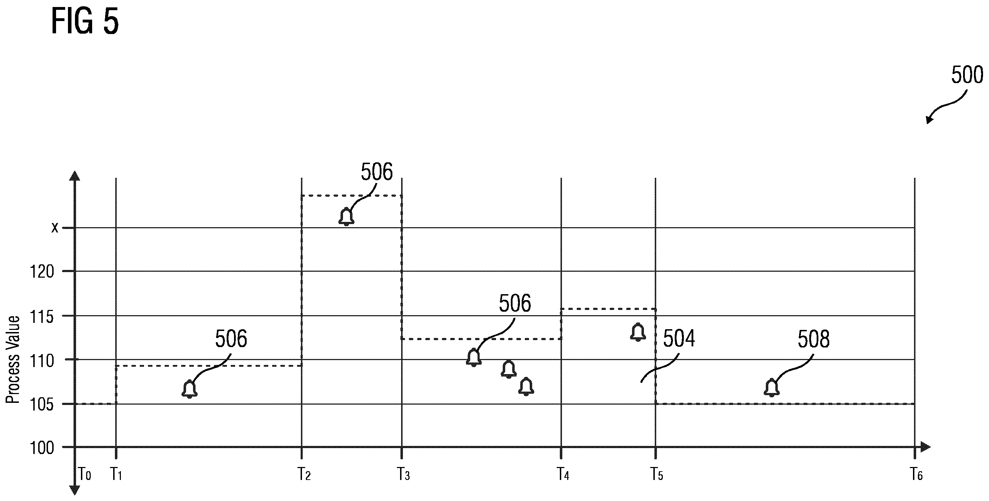

FIG. 5 is a process value versus time signature graph 500 illustrating adaptive hysteresis band operation, according to an embodiment of the present disclosure.

In FIG. 5, the process value versus time signature graph 500 plots process values on the y-axis against time progression on the x-axis, demonstrating how the adaptive hysteresis band 504 is dynamically adjusted in response to live contextual state changes. The adaptive hysteresis band 504 is depicted as a shaded region with alternating upper and lower boundaries that are responsively modified based on sequential contextual intervals, including communication state (T1-T2), process state (T2-T3), fault state of field devices (T3-T4), and operator inputs (T4-T5), as defined in the state legend.

A sequence of incoming alarm events, including nuisance alarms, is indicated by alarm symbols along the process value trajectory. Non-significant alarms 506 represent those alarm events that fall within the adaptive hysteresis band 504 and are thus omitted from operator presentation pursuant to the adaptive context-aware filtering mechanism described herein. The significant alarm 508 is shown as an event where the process value exceeds the adaptively determined hysteresis band for a sufficient duration, thereby qualifying as a significant alarm event per the methodology described with reference to the adaptive hysteresis band processor 306.

At each transition between intervals T1 through T5, the contextual parameters-including communication state, process state, fault condition, and operator input-are analyzed by the system to update the boundaries of the adaptive hysteresis band 504 in real time. When the process value trajectory crosses and persistently remains outside the adaptive hysteresis band 504, the system classifies the corresponding event as a significant alarm 508, which is then displayed to the operator via the human-machine interface 120A-N. Conversely, alarm events occurring within the current adaptive hysteresis band 504 are not classified as significant and are shown as non-significant alarms 506, thereby reducing nuisance alarms presented to the human operator in accordance with the object of the present disclosure.

The present disclosure can take the form of a computer program product comprising program modules, such as instructions that implement a contextual data fusion engine (304), an adaptive hysteresis band processor (306), a historical alarm database (310), a schema conversion & plug-in manager (308), and a human-machine interface (120A-N), accessible from a computer-usable or computer-readable medium having stored program code for use by or in connection with one or more computers, processors, or instruction execution environments within an industrial SCADA environment (102). For the purposes of this description, a computer-usable or computer-readable medium encompasses any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device), and includes non-transitory physical computer-readable media such as semiconductor or solid-state memory, magnetic tape, a removable computer diskette, random access memory (RAM), read-only memory (ROM), rigid magnetic disk and optical disk such as compact disk read-only memory (CD-ROM), compact disk read/write, and DVD. Both processing hardware and logic modules for implementing each aspect of the present technology-including time-synchronized contextual data fusion, adaptive computation of alarm thresholds and persistence windows, real-time alarm significance classification, operator feedback processing, regulatory safety constraint enforcement, and closed-loop alarm management-can be centralized within a single server node or distributed across multiple system components (or a combination thereof), as recognized by those skilled in the art.

While the present disclosure has been described in detail with respect to certain embodiments, it should be appreciated that the present disclosure is not limited to those embodiments. Modifications and variations may be conceived by those skilled in the art in view of this disclosure without departing from the scope of the various embodiments described herein. The scope of the present disclosure is indicated by the following claims rather than by the foregoing description, and all changes, modifications, and variations that come within the meaning and range of equivalency of the claims are to be considered within their scope. All advantageous embodiments claimed in method claims are likewise applicable to system and apparatus claims.

The described disclosure offers significant advantages over conventional SCADA alarm management and process monitoring solutions. By enabling the contextual data fusion engine (304) and schema conversion & plug-in manager (308) to dynamically synchronize and normalize heterogeneous alarm and contextual signals, and by empowering the adaptive hysteresis band processor (306) to adaptively tune alarm thresholds and persistence windows in response to both real-time and historical plant context, the alarm management system 102 greatly reduces operator alarm fatigue and ensures rigorous, traceable response to genuine process excursions. This adaptive, contextually driven approach ensures that only significant alarm events are presented to operators via the human-machine interface (120A-N), thereby minimizing the risk of missed critical alarms due to nuisance flooding, reducing workload, and enhancing operational safety. The present disclosure further supports scalable integration of new contextual data sources via plug-in modules and facilitates decentralized closed-loop learning through continuous operator feedback, historical pattern analysis, and regulatory compliance enforcement. Furthermore, the version-stamped historical alarm database (310) provides tamper-evident auditability for all threshold adjustments, alarm classifications, and operator actions, making the solution especially well-suited for industrial automation, IloT, and other mission-critical control environments where alarm reliability, traceability, and ongoing system optimization are paramount.

Unless expressly stated to the contrary, every quantitative value, percentage, code, latency, distance, threshold, or similar parameter recited in the present disclosure-including by way of illustration only the examples "250 ms," "5 km fibre," and "HTTP 200 when 99 % green"-is provided solely as a non-limiting, illustrative aid to enable persons of ordinary skill in the art to make and use the disclosed subject matter. Each such parameter is therefore to be understood as encompassing: (i) approximate or rounded values; (ii) values that vary (e.g., by manufacturing tolerance, design choice, network condition, or environmental factor); (iii) any operative sub-ranges, super-ranges, or combinations thereof; and (iv) any alternative, functionally equivalent values that achieve substantially the same technical effect. Accordingly, unless a specific numeric limitation is affirmatively recited in an appended claim, no individual value, ratio, percentage, range endpoint, or protocol code mentioned herein should be construed as an essential or exclusive limitation of the invention, and all modifications, substitutions, and equivalents falling within the scope and spirit of the claims are expressly contemplated.

### List of references

100 - SCADA environment
   102 - Alarm management system
   104 - Network / communication link
   106 - Technical installation / plant
   108A-N - Plant assets (sensors, PLCs, pumps, etc.)
   110 - SCADA platform
   112 - Adaptive alarm intelligence module
   114 - Server (hardware host)
   116 - Network interface (alarm-server side)
   118 - Database (general or plant database)
   120A-N - Human-machine interfaces (HMIs / operator stations)
   122A-N - HMI tools resident on the HMIs
202 - Processor(s)
   204 - Memory
   206 - Storage unit
   208 - Communication interface
   210 - Input-output unit
   212 - Network interface (hardware layer)
   214 - System bus
   216 - Integrated Development Environment (IDE) held in memory
302 - Signal ingest module
   304 - Contextual data fusion engine
   306 - Adaptive hysteresis band processor
   308 - Schema-conversion & plug-in manager
   310 - Historical alarm database
   312 - Significance validation module
   314 - HMI output module
402 - Step: receive alarm & contextual signals
   404 - Step: receive high-resolution time-stamped context
   406 - Step: synchronise alarm and context signals
   408 - Step: allocate workload across processor cores
   410 - Step: select plug-in module
   412 - Step: apply schema converter
   414 - Step: generate enriched alarm-context records
   416 - Step: determine context weights
   418 - Step: detect historical occurrence frequency
   420 - Step: determine adaptive thresholds & persistence windows
   422 - Step: modify thresholds by context weight
   424 - Step: modify thresholds by historical frequency
   426 - Step: determine regulatory safety constraint
   428 - Step: apply safety constraint
   430 - Step: output violation indication
   432 - Step: receive operator action
   434 - Step: closed-loop parameter update
   436 - Step: generate version-stamped updates
   438 - Step: synchronise updated parameters with database
   440 - Step: synchronise correlation confidence level
   442 - Step: detect subsidence of contextual parameter
   444 - Step: age threshold toward baseline
   446 - Step: output updated threshold
   448 - Step: classify alarm event as significant
   450 - Step: display applied weights / thresholds
   452 - Step: output reduced (significant-only) alarm list
   454 - Step: control graphical display of alarms
   456 - Step: display all-clear status
   458 - Step: synchronise user interactions with database
500 - Process-value-versus-time graph (FIG 5)
   504 - Adaptive hysteresis band (shaded region)
   506 - Non-significant alarm indicators
   508 - Significant alarm indicator

## Claims

1. A computer-implemented method for adaptive context-aware alarm management in a SCADA environment, the method comprising:
receiving, by a contextual data fusion engine (304), a plurality of alarm signals and a plurality of contextual signals;
generating, by the contextual data fusion engine (304), a plurality of enriched alarm context records by synchronizing at least one of the plurality of alarm signals with at least one of the plurality of contextual signals based on a time correlation;
determining, by an adaptive hysteresis band processor (306), at least one adaptive alarm threshold and at least one adaptive persistence window for each of the plurality of enriched alarm context records;
classifying, by the adaptive hysteresis band processor (306), at least one alarm event as significant if a process variable crosses the at least one adaptive alarm threshold for longer than the at least one adaptive persistence window;
and outputting, by a human-machine interface (120A-N), a display that
includes the at least one alarm event classified as significant and
omits alarm events not classified as significant, thereby reducing presentation of nuisance alarms to a human operator.

2. The method in accordance with claim 1, further comprising:
determining, by the adaptive hysteresis band processor (306), at least one context weight for each contextual parameter for each of the plurality of enriched alarm context records;
modifying, by the adaptive hysteresis band processor (306), the at least one adaptive alarm threshold in response to the determined at least one context weight;
and displaying, by the human machine interface (120A-N), an indication of the applied context weights and adaptive alarm thresholds for each of the at least one alarm event classified as significant.

3. The method in accordance with any of the preceding claims, further comprising:
detecting, by the adaptive hysteresis band processor (306), at least one historical occurrence frequency for at least one alarm event stored in a historical alarm database (310);
modifying, by the adaptive hysteresis band processor (306), at least one adaptive alarm threshold and at least one adaptive persistence window in response to the detected at least one historical occurrence frequency;
and synchronizing, by the adaptive hysteresis band processor (306), the modified adaptive alarm threshold and adaptive persistence window with the historical alarm database (310) for closed-loop feedback and traceability.

4. The method in accordance with any of the preceding claims, further comprising:
determining, by the adaptive hysteresis band processor (306), at least one regulatory safety constraint associated with at least one alarm event;
applying, by the adaptive hysteresis band processor (306), the at least one regulatory safety constraint to enforce a minimum and a maximum value on the at least one adaptive alarm threshold;
and outputting, by the human machine interface (120A-N), an indication if modifying the at least one adaptive alarm threshold would violate the at least one regulatory safety constraint.

5. The method in accordance with any of the preceding claims, further comprising:
receiving, by the adaptive hysteresis band processor (306), at least one operator action from the human machine interface (120A-N), the at least one operator action comprising at least one of an acknowledgement, shelving, or suppression of at least one alarm event;
modifying, by the adaptive hysteresis band processor (306), at least one context weight or adaptive alarm threshold in response to the received at least one operator action to implement closed-loop learning;
and generating, by the adaptive hysteresis band processor (306), version-stamped parameter updates to the historical alarm database (310).

6. The method in accordance with any of the preceding claims, further comprising:
receiving, by the contextual data fusion engine (304), a plurality of contextual signals that are time-stamped at source with high-resolution timing by a distributed context capture architecture (not independently numbered, but described);
synchronizing, by the contextual data fusion engine (304), the plurality of contextual signals and the plurality of alarm signals using the time-stamps to preserve temporal alignment;
and allocating, by the contextual data fusion engine (304), processing workload across multiple processor cores (202) to maintain sub-second alarm processing latency.

7. The method in accordance with any of the preceding claims, further comprising:
detecting, by the adaptive hysteresis band processor (306), a subsidence of at least one contextual parameter previously influencing an adaptive alarm threshold;
modifying, by the adaptive hysteresis band processor (306), the adaptive alarm threshold toward a baseline value according to a parameter aging mechanism;
and outputting, by the adaptive hysteresis band processor (306), the updated adaptive alarm threshold to maintain ongoing calibration integrity.

8. The method in accordance with any of the preceding claims, further comprising:
selecting, by the contextual data fusion engine (304), at least one plug-in module corresponding to a newly registered contextual channel;
applying, by the contextual data fusion engine (304), a schema converter to normalize signals from the at least one plug-in module;
and synchronizing, by the contextual data fusion engine (304), a correlation confidence level with the historical alarm database (310) for auditability.

9. The method in accordance with any of the preceding claims, further comprising:
controlling display, by the human machine interface (120A-N), of a graphical display of the at least one alarm event classified as significant, wherein the graphical display comprises associated contextual flags and adaptive alarm threshold parameters;
displaying, by the human machine interface (120A-N), an all-clear status when no alarm event is classified as significant;
and synchronizing, by the human machine interface (120A-N), user interactions with the historical alarm database (310) for continuous improvement.

10. A system for adaptive context-aware alarm management in a SCADA environment, comprising:
a contextual data fusion engine (304) configured to receive a plurality of alarm signals and a plurality of contextual signals, and to generate a plurality of enriched alarm context records by time synchronizing at least one of the plurality of alarm signals with at least one of the plurality of contextual signals;
an adaptive hysteresis band processor (306) configured to determine at least one adaptive alarm threshold and at least one adaptive persistence window for each of the plurality of enriched alarm context records using live contextual information and historical alarm data (310);
the adaptive hysteresis band processor (306) further configured to classify at least one alarm event as significant if a process variable crosses the at least one adaptive alarm threshold for longer than the at least one adaptive persistence window; and
a human machine interface (120A-N) configured to output a display that includes the at least one alarm event classified as significant and omits alarm events not classified as significant, thereby reducing presentation of nuisance alarms to a human operator.

11. The system in accordance with claim 10, further comprising:
the adaptive hysteresis band processor (306) configured to determine at least one context weight associated with each contextual parameter and to modify at least one adaptive alarm threshold in response to the determined at least one context weight;
and the human machine interface (120A-N) configured to display the applied context weights and adaptive alarm threshold values with each of the at least one alarm event classified as significant.

12. The system in accordance with any of the preceding system-based claims, further comprising:
a historical alarm database (310) configured to store at least one historical occurrence frequency for at least one alarm event;
the adaptive hysteresis band processor (306) configured to modify at least one adaptive alarm threshold and at least one adaptive persistence window in response to the at least one historical occurrence frequency;
and the adaptive hysteresis band processor (306) configured to synchronize the modified adaptive alarm threshold and adaptive persistence window with the historical alarm database (310) for closed-loop feedback.

13. The system in accordance with any of the preceding system-based claims, further comprising:
the adaptive hysteresis band processor (306) configured to determine at least one regulatory safety constraint associated with at least one alarm event;
the adaptive hysteresis band processor (306) further configured to apply the at least one regulatory safety constraint to enforce a minimum and a maximum value on the at least one adaptive alarm threshold;
and the human machine interface (120A-N) configured to display an alert if a modification to the at least one adaptive alarm threshold would violate the at least one regulatory safety constraint.

14. The system in accordance with any of the preceding system-based claims, further comprising:
the adaptive hysteresis band processor (306) configured to receive at least one operator action regarding at least one alarm event from the human machine interface (120A-N), the at least one operator action comprising at least one of an acknowledgement, shelving, or suppression;
the adaptive hysteresis band processor (306) configured to modify at least one context weight or adaptive alarm threshold in response to the at least one operator action to implement closed-loop learning;
and the adaptive hysteresis band processor (306) configured to generate version-stamped parameter updates to the historical alarm database (310).

15. The system in accordance with any of the preceding system-based claims, further comprising:
the contextual data fusion engine (304) configured to receive a plurality of contextual signals that are time-stamped at source with high-resolution timing by a distributed context capture architecture;
the contextual data fusion engine (304) configured to synchronize the plurality of contextual signals and the plurality of alarm signals using the time-stamps;
and the contextual data fusion engine (304) configured to allocate processing workload across multiple processor cores (202).
